# EUROPEAN PATENT APPLICATION

(11) **EP 3 680 144 A1**
(43) Date of publication of application: **15.07.2020**
(21) Application number: 17924716.8
(22) Date of filing: 06.09.2017
(51) Int. Cl.: B61H 13/00, B60L 7/00

(54) **MICROCOMPUTER-CONTROLLED ELECTROMECHANICAL BRAKING SYSTEM**

(71) Applicant: Shanghai Liupei Mechanical and Electrical Technology Co., Ltd, Shanghai 200092 (CN)
(72) Inventor: WU, Mengling, Shanghai 200092 (CN); TIAN, Chun, Shanghai 200092 (CN); CHEN, Maolin, Shanghai 200092 (CN); MA, Tianhe, Shanghai 200092 (CN); FENG, Fulei, Shanghai 200092 (CN); LEI, Chi, Shanghai 200092 (CN); YUAN, Zewang, Shanghai 200092 (CN)
(74) Representative: Zaboliene, Reda
(86) International application number: PCT/CN2017/100649
(87) International publication number: WO 2019/047049

(57) **Abstract**

A microcomputer-controlled electromechanical braking system comprises an electromechanical braking control device (1) and an electromechanical braking unit (5); the electromechanical braking control device (1) comprises a braking microcomputer control unit (2), an electromechanical control unit (3) and a standby power supply module (4); the braking microcomputer control unit (2) receives a braking instruction signal sent by a driver or an automatic driving system, performs the calculation of a target braking force and braking management, and at the same time, can communicate with braking microcomputer control units (2) of other vehicles in a train group. According to this system, a commonly used compressed air or hydraulic driving mode is replaced with an electric driving mode, meeting the function and performance requirements of a conventional braking system and making, on the basis of this, improvement on the functions and performances, thereby facilitating reduction of the overall complexity of the braking system and being able to effectively reduce the weight of this system.

## Description

### TECHNICAL FIELD

The present invention belongs to the field of braking systems of rail vehicles, and more particularly relates to a microcomputer-controlled electromechanical braking system.

### BACKGROUND

In the technical field of railway vehicle braking, friction braking has always been very important. For a long time, braking systems of rail vehicles have adopted automatic air braking systems, microcomputer-controlled direct-current air braking systems, etc., and used compressed air as source power of braking, accompanied with complex compositions, many components and parts, excessive volume and weight, slow response, and low control accuracy. With the continuous technical improvement in the field of rail transit braking systems, the systems continue to develop towards integration and miniaturization. However, the inherent disadvantages of the compressed air-driven method have hindered their further developments. Therefore, a hydraulic braking system has been gradually developed with the ever-increasing requirements on vehicle braking force and lightweight in the rail transit industry. Compared with compressed air drive, the system pressure of the hydraulic braking system which employs a hydraulic drive manner is greatly increased, the diameter of a brake cylinder is reduced, and the overall volume and weight of the braking system have been better controlled. However, a hydraulically driven control device still needs to arrange pipelines for connection, and the control system is also relatively complicated. In this context, the structural design of the electromechanical braking system and its coverage for functions of the original air braking system, as well as the specific implementations of these functions have become technical difficulties. The present invention aims to generate a friction braking force by directly converting electric energy into mechanical actions, simplifies an action link of the traditional air and hydraulic braking systems which firstly perform electric-pneumatic (hydraulic) conversion and then convert it into a mechanical force to apply braking, and has the advantages of high accuracy, fast response, easy monitoring, linkage capacity, modularization, lightweight, networking, intelligence, environmental protection and the like.

### SUMMARY

An object of the present invention is to provide an electromechanical braking system, which generates a friction braking force by directly converting electric energy into mechanical actions, and simplifies an action link of the traditional air and hydraulic braking systems which firstly perform electric-pneumatic (hydraulic) conversion and then convert it into a mechanical force to apply braking.

To fulfill said object, a microcomputer-controlled electromechanical braking system is designed, which comprises a power supply line, a signal line and a network cable, and further comprises electromechanical braking control devices and electromechanical braking units; each electromechanical brake control device and a plurality of electromechanical brake units form an independent microcomputer-controlled electromechanical brake module; each electromechanical braking control device comprises a braking microcomputer control unit and an electromechanical control unit; the braking microcomputer control unit included in each electromechanical braking control device receives train braking and release signals, completes calculation of a target braking force according to load information, braking instructions and vehicle speed signals, and transmits a target braking force signal and the braking and release signals to the electromechanical control units, and the electromechanical control unit controls the actions of the electromechanical braking units to apply and release the braking force.

In a preferred embodiment, each electromechanical braking control device further comprises a standby power supply module; each electromechanical braking control device is normally powered by a train, and is automatically switched to be powered by the standby power supply module in an emergent case; and each electromechanical braking unit is powered by the corresponding electromechanical control unit.

In a preferred embodiment, each brake microcomputer control unit is communicated with the corresponding electromechanical control unit in two implementation forms of a fieldbus technology and a hard-wired signal; and a fieldbus is used for communication in common cases, and the hard-wired signal is used for backup of communications in an emergent case.

In a preferred embodiment, each electromechanical control unit independently controls one or two electromechanical braking units in real time; and each electromechanical control unit comprises a common control module and an emergency control module, which are configured to control the electromechanical braking units to perform brake release and application in a common working condition and an emergent working condition, respectively.

In a preferred embodiment, each braking microcomputer control unit dynamically calculates a desired electromechanical braking force according to the magnitude of the electric braking force, and performs a cooperation between electric braking and electromechanical braking, and an allocation of the braking force among the electromechanical braking units; and each electromechanical control unit controls the braking force output by the corresponding electromechanical braking unit to be variable during braking.

In a preferred embodiment, the electromechanical brake control devices realize switching of vehicle control, frame control, axis control, disc control, and wheel control through software configuration.

In a preferred embodiment, each braking microcomputer control unit controls a parking brake actuator in the corresponding electromechanical braking unit to be powered off or powered on, so that the train has a function of maintaining and releasing the parking braking force.

In a preferred embodiment, each electromechanical control unit performs limited processing on signals output to the corresponding electromechanical braking unit on software or hardware circuits, so that the process of the rise and drop of the electromechanical braking force meets requirements of train shock limitation.

In a preferred embodiment, each brake microcomputer control unit performs wheelset slip detection and anti-slip control according to singles from a speed sensor installed at the shaft end; the control signals are divided into three modes: a force reduction mode, a maintenance mode, and a force increase mode; and each electromechanical control unit controls the electromechanical braking unit to reduce, maintain and increase the corresponding braking force according to the anti-slip control mode signal.

In a preferred embodiment, the standby power supply module comprises a battery or a battery pack and a power management module, which realizes self-management of battery charging and discharging, and meanwhile has a communication interface with the corresponding braking microcomputer control unit to receive the control signals and feed back state signals.

In a preferred embodiment, each electromechanical braking unit comprises a motor-driven friction braking device for a rail vehicle; the device consists of a torque motor, an electromagnetic brake, a nut, a screw and a brake friction pair, wherein the torque motor comprises a torque motor rotor and a torque motor body and is of a hollow structure; the screw is inserted into the hollow part of the torque motor and is coaxially fixedly connected to the motor; the screw is sleeved with the nut and is in non-self-locking threaded connection with the nut; one end of the nut is connected to the brake friction pair; the electromagnetic brake sleeves the screw; the torque motor rotor generates a braking torque which is transmitted to the braking friction pair through the screw and the nut in sequence to achieve braking.

In a preferred embodiment, each electromechanical braking unit comprises a mechanical power-amplifying type motor-driven friction braking device for a rail vehicle; the device consists of a torque motor, a speed reduction mechanism, an electromagnetic brake, a nut, a screw and a brake friction pair, wherein the torque motor comprises a torque motor rotor and a torque motor body; the speed reduction mechanism is composed of a sun gear, a planet gear, and a planet gear carrier; the torque motor is of a hollow structure; the screw is inserted into the hollow part of the torque motor and is coaxial with the torque motor; the torque motor rotor is fixedly connected to the sun gear; the planet gear carrier is fixedly connected to the screw; the screw is sleeved with the nut and is in non-self-locking threaded connection with the nut; one end of the nut is connected to the brake friction pair; the electromagnetic brake sleeves the screw; the torque motor rotor generates a braking torque which is transmitted to the braking friction pair through the speed reduction mechanism, the screw and the nut in sequence to achieve braking.

The beneficial effects of the present invention include, but are limited to the followings: a compressed air or hydraulic driving mode commonly used in the current rail vehicle braking system is replaced with an electric driving mode in the present invention; a microcomputer controlled electromechanical braking system adapted to this mode is proposed to meet the function and performance requirements of conventional air and hydraulic braking systems, and make, on the basis of this, improvement on the functions and performances, facilitating reduction of the overall complexity of the braking system and being able to effectively reduce the weight of the system.

### BRIEF DESCRIPTION OF THE DRAWINGS

FIG. 1 illustrates a schematic diagram of a system of the present invention according to an embodiment of the present invention.
FIG. 2 illustrates a diagram of a motor-driven friction braking device for a rail vehicle according to the present invention.
FIG. 3 is a diagram illustrating a mechanical power-amplifying type motor-driven friction braking device for a rail vehicle according to an embodiment of the present invention.

In drawings, reference symbols represent the following components: 1-electromechanical brake control device, 2-brake microcomputer control unit, 3-electromechanical control unit, 4-standy power supply module, 5-electromechanical brake unit.

### DETAILED DESCRIPTION

The present invention will be further described below with reference to the accompanying drawings. The structure and principle of this device are very clear to those skilled in the art. It should be understood that the specific embodiments described herein are only used to explain the present invention and are not intended to limit the present invention.

The following detailed description refers to the accompanying drawings, which form a part of the detailed description. In the drawings, similar symbols typically identify similar components, unless context dictates otherwise. The illustrative embodiments described in the detailed description, drawings and claims are not intended to be limitative. Other embodiments may be used, and other changes may be made, without departing from the spirit or scope of the subject matter provided by the present invention.

As shown in FIG, 1, a microcomputer-controlled electromechanical braking system comprises a power supply line, a signal line and a network cable, and further comprises electromechanical braking control devices (1) and electromechanical braking units (5), wherein each electromechanical brake control device (1) and a plurality of electromechanical brake units (5) form an independent microcomputer-controlled electromechanical brake module; each electromechanical braking control device (1) comprises a braking microcomputer control unit (2) and an electromechanical control unit (3); the braking microcomputer control unit (2) included in each electromechanical braking control device (1) receives train braking and release signals, completes calculation of a target braking force according to load information, braking instructions and vehicle speed signals, and transmits a target braking force signal and the braking and release signals to the electromechanical control units (3), and the electromechanical control unit controls the actions of the electromechanical braking units to apply and release the braking force.

Each electromechanical braking control device (1) further comprises a standby power supply module (4); each electromechanical braking control device is normally powered by a train, and is automatically switched to be powered by the standby power supply module in an emergent case; and each electromechanical braking unit is powered by the corresponding electromechanical control unit.

Each brake microcomputer control unit (2) is communicated with the corresponding electromechanical control unit (3) in two implementation forms of a fieldbus technology and a hard-wired signal; and a fieldbus is used for communication in common cases, and the hard-wired signal is used for backup of communications in an emergent case.

Each electromechanical control unit (3) independently controls one or two electromechanical braking units in real time; and each electromechanical control unit comprises a common control module and an emergency control module, which are configured to control the electromechanical braking units to perform brake release and application in a common working condition and an emergent working condition, respectively.

Each braking microcomputer control unit (2) dynamically calculates a desired electromechanical braking force according to the magnitude of the electric braking force, and performs a cooperation between electric braking and electromechanical braking, and an allocation of the braking force among the electromechanical braking units; and each electromechanical control unit (3) controls the braking force output by the corresponding electromechanical braking unit (5) to be variable during braking.

The electromechanical brake control devices realize switching of vehicle control, frame control, axis control, disc control, and wheel control through software configuration.

Each braking microcomputer control unit (2) controls a parking brake actuator in the corresponding electromechanical braking unit to be powered off or powered on, so that the train has a function of maintaining and releasing the parking braking force.

Each electromechanical control unit (3) performs limited processing on signals output to the corresponding electromechanical braking unit on software or hardware circuits, so that the process of the rise and drop of the electromechanical braking force meets requirements of train shock limitation.

Each brake microcomputer control unit (2) performs wheelset slip detection and anti-slip control according to singles from a speed sensor installed at the shaft end; the control signals are divided into three modes: a force reduction mode, a maintenance mode, and a force increase mode; and each electromechanical control unit controls the electromechanical braking unit to reduce, maintain and increase the corresponding braking force according to the anti-slip control mode signal.

The standby power supply module (4) comprises a battery or a battery pack and a power management module, which realizes self-management of battery charging and discharging, and meanwhile has a communication interface with the corresponding braking microcomputer control unit to receive the control signals and feed back state signals.

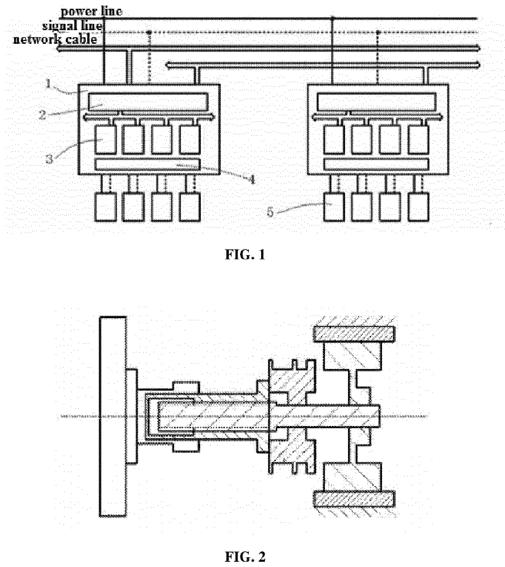

Referring to FIG. 2, each electromechanical braking unit (5) comprises a motor-driven friction braking device for a rail vehicle; the device consists of a torque motor, an electromagnetic brake, a nut, a screw and a brake friction pair, wherein the torque motor comprises a torque motor rotor and a torque motor body and is of a hollow structure; the screw is inserted into the hollow part of the torque motor and is coaxially fixed with the motor; the screw is sleeved with the nut and is in non-self-locking threaded connection with the nut; one end of the nut is connected to the brake friction pair; the electromagnetic brake sleeves the screw; the torque motor rotor generates a braking torque which is transmitted to the braking friction pair through the screw and the nut in sequence to achieve braking.

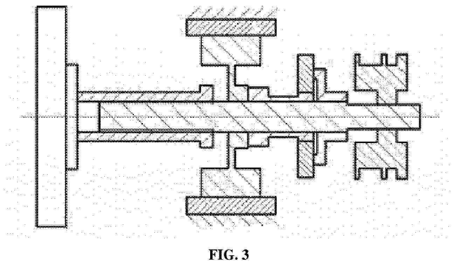

Referring to FIG. 3, each electromechanical braking unit (5) comprises a mechanical power-amplifying type motor-driven friction braking device for a rail vehicle; the device consists of a torque motor, a speed reduction mechanism, an electromagnetic brake, a nut, a screw and a brake friction pair, wherein the torque motor comprises a torque motor rotor and a torque motor body; the speed reduction mechanism is composed of a sun gear, a planet gear, and a planet gear carrier; the torque motor is of a hollow structure; the screw is inserted into the hollow part of the torque motor and is coaxial with the torque motor; the torque motor rotor is fixedly connected to the sun gear; the planet gear carrier is fixedly connected to the screw; the screw is sleeved with the nut and is in non-self-locking threaded connection with the nut; one end of the nut is connected to the brake friction pair; the electromagnetic brake sleeves the screw; the torque motor rotor generates a braking torque which is transmitted to the braking friction pair through the speed reduction mechanism, the screw and the nut in sequence to achieve braking.

The electromechanical braking unit (5) refers to a braking unit employing an electromechanical braking technology, and specific implementation forms include, but are not limited to, the mechanical motor-driven friction braking device for a rail vehicle and the mechanical force-amplifying type motor-driven friction braking device for a rail vehicle.

Embodiment 1: referring to FIG. 2, the electromechanical braking unit (5) adopts a friction braking device driven by a rail vehicle motor. The braking method is as follows: when the torque motor rotor rotates forward, a desired braking torque is generated, and the electromagnetic brake and the screw are electrically separated; the torque motor rotor drives the screw to rotate, and the nut makes a translational motion by means of the rotation of the screw, resulting in an axial motion; a brake friction pair installed on one end of the nut generates a brake clamping force; at this time, if the electromagnetic brake is powered off, the electromagnetic brake will lock the screw and the braking force will be maintained; when the torque motor rotor rotates reversely, the nut makes a translational motion reversely, and the brake friction pair is released.

Embodiment 2: referring to FIG. 3, the electromechanical braking unit (5) adopts a mechanical power-amplifying type motor-driven friction braking device for a rail vehicle. The braking method is as follows: when the torque motor rotor rotates forward, the braking torque is generated, and the electromagnetic brake and the screw are electrically separated; the torque motor rotor drives the sun gear to rotate, and the screw rotates through the planet gear and the planet gear carrier, and the nut makes a translational motion by means of the rotation of the screw, resulting in an axial motion; a brake friction pair installed on one end of the nut generates a brake clamping force; at this time, if the electromagnetic brake is powered off, the electromagnetic brake will lock the screw and the braking force will be maintained; when the torque motor rotor rotates reversely, the nut makes a translational motion reversely, and the brake friction pair is released.

Although some solutions and embodiments have been disclosed herein, other solutions and embodiments will be apparent to those skilled in the art. The various solutions and embodiments disclosed herein are exemplary and are not intended to be limitative, the true scope and spirit being indicated by the appended claims.

## Claims

1. A microcomputer-controlled electromechanical braking system, comprising a power supply line, a signal line and a network cable, and further comprising electromechanical braking control devices (1) and electromechanical braking units (5), wherein each electromechanical brake control device (1) and a plurality of electromechanical brake units (5) form an independent microcomputer-controlled electromechanical brake module; each electromechanical braking control device (1) comprises a braking microcomputer control unit (2) and an electromechanical control unit (3); the braking microcomputer control unit (2) included in each electromechanical braking control device (1) receives train braking and release signals, completes calculation of a target braking force according to load information, braking instructions and vehicle speed signals, and transmits a target braking force signal and the braking and release signals to the electromechanical control units (3), and the electromechanical control unit controls the actions of the electromechanical braking units to apply and release the braking force.

2. The electromechanical braking system according to claim 1, wherein each electromechanical braking control device (1) further comprises a standby power supply module (4); each electromechanical braking control device is normally powered by a train, and is automatically switched to be powered by the standby power supply module in an emergent case; and each electromechanical braking unit is powered by the corresponding electromechanical control unit.

3. The electromechanical braking system according to claim 1, wherein each brake microcomputer control unit (2) is communicated with the corresponding electromechanical control unit (3) in two implementation forms of a fieldbus technology and a hard-wired signal; and a fieldbus is used for communication in common cases, and the hard-wired signal is used for backup of communications in an emergent case.

4. The electromechanical braking system according to claim 1, wherein each electromechanical control unit (3) independently controls one or two electromechanical braking units in real time; and each electromechanical control unit comprises a common control module and an emergency control module, which are configured to control the electromechanical braking units to perform brake release and application in a common working condition and an emergent working condition, respectively.

5. The electromechanical braking system according to claim 1, wherein each braking microcomputer control unit (2) dynamically calculates a desired electromechanical braking force according to the magnitude of the electric braking force, and performs a cooperation between electric braking and electromechanical braking, and an allocation of the braking force among the electromechanical braking units; and each electromechanical control unit (3) controls the braking force output by the corresponding electromechanical braking unit (5) to be variable during braking.

6. The electromechanical braking system according to claim 1, wherein the electromechanical brake control devices realize switching of vehicle control, frame control, axis control, disc control, and wheel control through software configuration.

7. The electromechanical braking system according to claim 1, wherein each braking microcomputer control unit (2) controls a parking brake actuator in the corresponding electromechanical braking unit to be powered off or powered on, so that the train has a function of maintaining and releasing the parking braking force.

8. The electromechanical braking system according to claim 1, wherein each electromechanical control unit (3) performs limited processing on signals output to the corresponding electromechanical braking unit on software or hardware circuits, so that the process of the rise and drop of the electromechanical braking force meets requirements of train shock limitation.

9. The electromechanical braking system according to claim 1, wherein each brake microcomputer control unit (2) performs wheelset slip detection and anti-slip control according to singles from a speed sensor installed at the shaft end; the control signals are divided into three modes: a force reduction mode, a maintenance mode, and a force increase mode; and each electromechanical control unit controls the electromechanical braking unit to reduce, maintain and increase the corresponding braking force according to the anti-slip control mode signal.

10. The electromechanical braking system according to claim 1, wherein the standby power supply module (4) comprises a battery or a battery pack and a power management module, which realizes self-management of battery charging and discharging, and meanwhile has a communication interface with the corresponding braking microcomputer control unit to receive the control signals and feed back state signals.

11. The electromechanical braking system according to claim 1, wherein each electromechanical braking unit (5) comprises a motor-driven friction braking device for a rail vehicle; the device consists of a torque motor, an electromagnetic brake, a nut, a screw and a brake friction pair, wherein the torque motor comprises a torque motor rotor and a torque motor body and is of a hollow structure; the screw is inserted into the hollow part of the torque motor and is coaxially fixed with the motor; the screw is sleeved with the nut and is in non-self-locking threaded connection with the nut; one end of the nut is connected to the brake friction pair; the electromagnetic brake sleeves the screw; the torque motor rotor generates a braking torque which is transmitted to the braking friction pair through the screw and the nut in sequence to achieve braking.

12. The electromechanical braking system according to claim 1, wherein each electromechanical braking unit (5) comprises a mechanical power-amplifying type motor-driven friction braking device for a rail vehicle; the device consists of a torque motor, a speed reduction mechanism, an electromagnetic brake, a nut, a screw and a brake friction pair, wherein the torque motor comprises a torque motor rotor and a torque motor body; the speed reduction mechanism is composed of a sun gear, a planet gear, and a planet gear carrier; the torque motor is of a hollow structure; the screw is inserted into the hollow part of the torque motor and is coaxial with the torque motor; the torque motor rotor is fixedly connected to the sun gear; the planet gear carrier is fixedly connected to the screw; the screw is sleeved with the nut and is in non-self-locking threaded connection with the nut; one end of the nut is connected to the brake friction pair; the electromagnetic brake sleeves the screw; the torque motor rotor generates a braking torque which is transmitted to the braking friction pair through the speed reduction mechanism, the screw and the nut in sequence to achieve braking.
